# FASCICULE DE BREVET EUROPEEN

(11) **EP 3 368 352 B1**
(45) Date de publication et mention de la délivrance du brevet: **21.08.2019**
(21) Numéro de dépôt: 16787904.8
(22) Date de dépôt: 28.10.2016
(51) Int. Cl.: B60C 11/24, B60C 11/03, B60C 11/12

(54) **BANDE DE ROULEMENT À CREUX CACHÉS COMPRENANT UN INDICATEUR D'USURE AYANT UNE VISIBILITÉ AMÉLIORÉE**
LAUFFLÄCHE MIT VERBORGENEN HOHLRÄUMEN MIT EINER VERSCHLEISSANZEIGE MIT VERBESSERTER SICHTBARKEIT
TREAD WITH CONCEALED CAVITIES COMPRISING A WEAR INDICATOR HAVING IMPROVED VISIBILITY

(30) Priorité: 29.10.2015 FR 1560374
(43) Date de publication de la demande: 05.09.2018
(73) Titulaire: Compagnie Générale des Etablissements Michelin, 63000 Clermont-Ferrand (FR)
(72) Inventeur: CAMBON, Stéphanie, 63040 Clermont-Ferrand Cedex 9 (FR); MUHLHOFF, Olivier, 63040 Clermont-Ferrand Cedex 9 (FR)
(74) Mandataire: Diernaz, Christian
(86) Numéro de dépôt international: PCT/EP2016/076124
(87) Numéro de publication internationale: WO 2017/072317

(56) Documents cités:
- EP-A1- 2 311 655
- EP-A1- 2 644 408
- WO-A1-2016/156718
- FR-A1- 3 018 222
- US-A- 3 770 040

## Description

### DOMAINE DE L'INVENTION

La présente invention concerne un pneu comportant une bande de roulement pourvue de creux sous-jacents à sa surface de roulement. L'invention concerne plus particulièrement des moyens formés sur ce pneu pour améliorer la visibilité des indicateurs de limite d'usure dès lors que ces creux sous-jacents sont ouverts et forment de nouvelles rainures.

### ÉTAT DE LA TECHNIQUE

De façon connue, l'utilisation de pneus dans des conditions de roulage par temps de pluie requiert une élimination rapide de l'eau présente dans la région de contact du pneu avec la chaussée afin d'assurer un contact du matériau constituant la bande de roulement avec cette chaussée. L'eau qui n'est pas repoussée sur l'avant du pneu s'écoule ou est captée en partie dans les rainures formées dans la bande de roulement du pneu.

Ces rainures forment un réseau d'écoulement qui se doit d'être pérenne c'est-à-dire être efficace pendant toute la durée d'usage d'un pneu entre son état neuf et son retrait pour cause d'usure atteignant la limite fixée par la réglementation.

Les conditions de roulage par tout type de temps nécessitent qu'un pneu comprenne dans sa bande de roulement un volume de creux ouverts en permanence sur sa surface de roulement afin de drainer l'eau éventuellement présente sur la chaussée. Ceci doit être satisfait pendant toute la durée d'utilisation et notamment jusqu'à usure complète.

Il est connu de former à neuf des rainures ayant des profondeurs correspondant à la hauteur supérieure à la hauteur maximale de matière à user de manière à conserver pendant toute la durée d'utilisation du pneu un volume de creux minimal. Ceci a pour conséquence une réduction des rigidités de la bande ce qui est défavorable du point de vue de l'usure.

Dans une nouvelle génération de creux, on forme dans une bande de roulement un volume total de creux réduit par rapport à la solution usuelle qui vient d'être décrite, ce volume total de creux étant partagé entre un volume ouvert sur la surface de roulement à neuf et un volume de creux formé sous la surface de roulement à neuf. La partie ouverte correspond à des rainures ayant des profondeurs pouvant être réduite par rapport à l'épaisseur de matière à user. La partie fermée correspond à des volumes de creux cachés formés par des canaux. Ces canaux sont destinés à s'ouvrir sur la surface de roulement après une usure partielle de la bande prédéterminée. Ces nouveaux volumes de creux compensent alors la diminution des volumes de creux des rainures initialement ouvertes sur la surface de roulement à neuf.

Grâce à ces nouvelles rainures, il est possible de limiter à neuf la réduction de rigidité de la bande par la présence additionnelle de matière.

Pour limiter l'abaissement de rigidité liée à la présence des rainures nécessitée par le besoin d'assurer le drainage de l'eau, il a été proposé une solution décrite dans la publication de brevet WO 2011/039194. Selon cette solution, il est proposé une bande de roulement pour pneu ayant une épaisseur E, cette bande étant pourvue d'une pluralité de rainures discontinues sur la surface de roulement et ayant une géométrie ondulant dans l'épaisseur de la bande. Chaque rainure ondulante est discontinue en surface mais continue à neuf dans l'intérieur de la bande afin de permettre un écoulement de fluide. Cette rainure ondulante est formée dans la bande de roulement par une succession de cavités externes s'ouvrant sur la surface de roulement à neuf et une pluralité de cavités internes, ces dernières étant placées radialement et en totalité à l'intérieur de la surface de roulement à l'état neuf entre les cavités externes. Les cavités internes peuvent être prévues pour être à des profondeurs différentes à l'intérieur de la bande. En outre, la continuité de l'écoulement d'eau dans chaque rainure ondulante à neuf est assurée par la présence de cavités de liaison, chaque cavité de liaison reliant une cavité externe à une cavité interne. Chaque cavité de liaison a deux extrémités, l'une de ces extrémités étant connectée à une cavité interne d'une part et l'autre extrémité étant connectée à une cavité externe d'autre part. Chaque cavité de liaison présente des sections transversales (dans un plan de coupe perpendiculaire à la direction moyenne de la rainure) dont les aires sont différentes de zéro et sont égales respectivement aux aires des sections transversales des cavités interne et externe reliées par cette cavité de liaison.

Afin de préserver le niveau de sécurité d'un véhicule, il est indispensable que l'usager contrôle le niveau d'usure des pneus de façon régulière. Pour cela, l'usager peut observer la surface de la bande de roulement de ses pneus et peut mesurer la profondeur des creux visibles. Cette mesure est facilitée par un élément que le manufacturier du pneu prévoit sur tout type de pneu : l'indicateur d'usure. L'indicateur d'usure permet d'évaluer sur une base d'une référence fiable, le niveau d'usure des pneus. Cet indicateur est usuellement moulé dans les rainures. Ainsi lorsque la surface de roulement de la bande de roulement d'un pneu arrive à la même hauteur que les indicateurs d'usure, il convient de remplacer le pneu ou de procéder à un renouvellement de sa bande de roulement par l'opération de rechapage.

Le document US 37700440 A divulgue un pneu comprenant un canal dans lequel il est formé un indicateur d'usure. Le document EP2311655-A1 montre un pneu selon le préambule de la revendication 1. Le document WO2016/156718-A1 montre aussi une bande pertinente pour l'invention.

Dans le cas de pneus comprenant au moins un canal destiné à former une rainure après une usure partielle de sa bande de roulement, il est également nécessaire d'informer l'usager sur la possibilité de rouler encore un certain temps avant de devoir changer les pneus pour usure. Cette information doit être faite d'une manière forte dès lors qu'une nouvelle rainure est formée sur la surface de roulement. Des indicateurs d'usure usuels risquent de ne pas être suffisamment distinguables du fond de la nouvelle rainure.

Pour résoudre ce problème, l'invention prévoit différents moyens techniques.

### Définitions :

Par « pneu », on entend tous les types de bandages élastiques soumis à une pression interne ou non.

Par indicateur d'usure ou indicateur de limite d'usure, on entend un moyen indiquant la limite d'usure à partir de laquelle il est nécessaire de procéder au changement de pneu ou encore au renouvellement de sa bande de roulement.

Par « matériau caoutchoutique », on entend un élastomère diénique, c'est-à-dire de manière connue un élastomère issu d'au moins en partie (c'est-à-dire homopolymère ou un copolymère) de monomères diènes (monomères porteurs de deux doubles liaisons carbone-carbone, conjuguées ou non).

Par « bande de roulement » d'un pneu, on entend une quantité de matériau caoutchoutique délimitée par des surfaces latérales et par une surface de roulement destinée à entrer en contact avec une chaussée.

Par « texture », on entend un agencement organisé d'une pluralité d'éléments de relief, tout ou partie des éléments de l'agencement étant la répétition d'un même élément de base, par exemple, un brin ou une lamelle. Ces éléments de base peuvent être réalisés pour faire saillie sur une surface ou bien pour être en creux sur cette surface. Cet agencement génère une rugosité moyenne arithmétique Ra dont la valeur est au moins égale à 12. Une surface dépourvue de texture est interprétée comme une surface dont la rugosité moyenne arithmétique Ra est inférieure à 12.

Par « brin », on entend un élément filiforme dont la hauteur est au moins égale à deux fois le diamètre d'un disque de même surface que la section moyenne du brin.

Par « lamelles », on entend des éléments allongés présentant une longueur au moins égale à deux fois leur hauteur.

Par « luminosité » ou « luminance », on entend le paramètre qui caractérise une surface à réfléchir plus ou moins la lumière. La luminosité est exprimée selon une échelle allant de 0 à 100 selon le modèle colorimétrique L*a*b* établit par la CIE (Commission Internationale de l'Éclairage) en 1976. La valeur 100 représente le blanc ou la réflexion totale ; la valeur 0, le noir ou l'absorption totale.

Plan médian équatorial : c'est un plan perpendiculaire à l'axe de rotation et passant par les points du pneu radialement les plus éloignés dudit axe.

Par direction radiale, on entend dans le présent document une direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

L'épaisseur totale E d'une bande de roulement est mesurée, sur le plan équatorial du pneu pourvu de cette bande, entre la surface de roulement et la partie radialement la plus à l'extérieur de l'armature de sommet à l'état neuf.

Une bande de roulement a une épaisseur maximale de matière à user en roulage, cette épaisseur maximale de matière à user étant inférieure à l'épaisseur totale E.

Les conditions usuelles de roulage du pneu ou conditions d'utilisation sont celles qui sont définies par la norme E.T.R.T.O. pour des roulages européens ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

Une découpure désigne de manière générique soit une rainure soit une incision et correspond à l'espace délimité par des parois de matière se faisant face et distantes l'une de l'autre d'une distance non nulle (dite "largeur de la découpure"). Ce qui différencie une incision d'une rainure c'est précisément cette distance ; dans le cas d'une incision, cette distance est appropriée pour permettre la mise en contact au moins partielle des parois opposées délimitant ladite incision au moins lors du passage dans le contact avec la chaussée. Dans le cas d'une rainure, les parois de cette rainure ne peuvent venir en contact l'une contre l'autre dans les conditions usuelles de roulage telles que définies par exemple par l'E.R.T.O..

Une rainure est dite continue dès lors qu'elle est ouverte sur la surface de roulement à neuf et cela sur toute son étendue. La direction principale d'une rainure correspond à la direction principale d'un écoulement de liquide dans ladite rainure.

Une rainure est dite discontinue dès lors qu'elle est formée d'une succession de parties ouvertes sur la surface de roulement à neuf, ces parties étant disjointes les unes des autres dans la direction principale de cette rainure (c'est à dire son étendue). Ces parties disjointes en surface peuvent être reliées entre elles par des parties sous-jacentes à la surface de roulement à neuf.

La surface moyenne d'une rainure continue ou discontinue est définie comme une surface virtuelle divisant cette rainure, dans la direction principale de cette rainure, en deux parties égales ou sensiblement égales.

La direction principale d'une rainure correspond à la direction d'un écoulement d'eau dans la rainure lors d'un roulage sur une chaussée revêtue d'eau.

### BREF EXPOSE DE L'INVENTION

Un objet de l'invention consiste à former un pneu dont la bande de roulement comporte au moins un canal caché, ou une partie formant canal caché, ce canal étant destiné à s'ouvrir sur la surface de roulement de la bande de roulement après une usure partielle prédéterminée pour former une rainure. Combiné à ce au moins un canal il est formé un indicateur d'usure dans ce canal qui est prévu pour être visible lors de l'ouverture dudit canal sur la surface de roulement.

L'invention propose un moyen permettant de faciliter l'identification ou la localisation des indicateurs d'usure de la bande de roulement.

Pour ce faire, l'invention concerne un pneu comprenant une bande de roulement, le pneu comprenant au moins un canal caché destiné à s'ouvrir sur la surface de roulement de la bande de roulement pour former une nouvelle rainure, au moins un indicateur d'usure disposé en relief sur le fond de ce canal, cet indicateur d'usure ayant une hauteur appropriée correspondant à une limite d'usure pour la bande de roulement. Cet indicateur d'usure comprend une face de contact destinée à entrer en contact avec une chaussée lorsque le pneu atteint la limite d'usure limite.

L'invention est telle que le fond du canal caché pourvu d'un indicateur d'usure présente une luminosité dite première luminosité (L*1), et la face de contact de l'indicateur d'usure présente une luminosité dite seconde luminosité (L*2), la différence de luminosité entre la première et la seconde luminosité étant d'au moins 5 unités de luminosité (sur une échelle variant de 0 à 100), les moyens pour obtenir la première luminosité correspondant à une texture formée de motifs venus de matière avec un pas moyen répétitif compris entre 0.1 mm et 0.6 mm.

Une telle différence de luminosité permet de créer un effet de contraste facilement perceptible pour un utilisateur. Cet effet de contraste peut avantageusement servir à localiser un point ou une région spécifique tel qu'un indicateur d'usure, habituellement difficilement repérable sur une bande de roulement puisque sans un effet de contraste.

La première luminosité (L*1) est avantageusement comprise entre 5 et 18 unités, et préférentiellement entre 8 et 16 unités. Les valeurs tendent vers le noir, de façon à bien absorber la lumière incidente.

La luminosité de la face de contact (ou seconde luminosité) est comprise entre 20 et 35 unités. Les valeurs tendent vers le blanc, de façon à bien réfléchir la lumière incidente.

Afin d'obtenir ces valeurs de luminosité, il est proposé que le canal caché comprenne une texture venue de matière sur le fond de ce canal, cette texture entourant l'indicateur d'usure pour faire contraste avec la face de contact de l'indicateur d'usure. La face de contact de l'indicateur est bien sûr dépourvue de texture.

Les surfaces du canal ainsi texturées absorbent quasiment en totalité la lumière reçue lorsque le canal est ouvert et forme une nouvelle rainure. À l'inverse, les surfaces plus lisses des indicateurs d'usure permettent une certaine réflexion de la lumière. Cela crée de fait un contraste entre les deux surfaces et rend davantage visible l'indicateur d'usure. L'usager peut ainsi identifier ou localiser les indicateurs d'usure de ses pneus avec une plus grande facilité, rendant le contrôle d'usure des pneus plus aisé.

Selon un mode de réalisation avantageux, l'indicateur d'usure comprend au moins une face latérale reliant la face de contact de l'indicateur d'usure au fond du canal, cette face latérale étant pourvue avec une texture pouvant être semblable à celle formée sur le fond du canal. La face latérale texturée contribue à améliorer la visibilité de l'indicateur d'usure dans la rainure.

Selon encore un mode de réalisation avantageux, le fond du canal comporte au moins une zone dépourvue de toute texture, cette zone étant disposée entre une zone pourvue d'une texture et une face latérale de l'indicateur d'usure. Préférentiellement, la zone dépourvue de texture a une dimension moyenne comprise entre 3 et 10 millimètres.

Une telle zone dépourvue de texture peut en outre servir avantageusement de zone de mesure afin de contrôler précisément et de manière certaine la hauteur de l'indicateur d'usure.

En variante, la texture est en creux par rapport au fond du canal. Une telle disposition en creux réduit le risque de perturber le flux d'écoulement d'eau et ne perturbe pas la mesure de la hauteur de l'indicateur d'usure.

Dans une autre variante de l'invention, on peut associer à des canaux sous-jacents à la surface de roulement à neuf la présence de puits de mesure de l'épaisseur à user jusqu'à atteindre les indicateurs de limite d'usure. Avantageusement de tels puits de mesure sont formés à l'aplomb des indicateurs de manière à laisser voir une partie de la face de contact d'un indicateur et une partie de fond du canal. L'écart de luminosité entre les deux parties facilite le repérage par l'usager de l'indicateur d'usure. Grâce à chaque puits il est possible de mesurer l'épaisseur totale (distance entre la surface de roulement à neuf et le fond du canal) et l'épaisseur à user (distance entre la surface de roulement à neuf et face de contact de l'indicateur).

D'autres caractéristiques et avantages de l'invention ressortent de la description faite ci-après en référence aux dessins annexés qui montrent, à titre d'exemples non limitatifs, des formes de réalisation de l'objet de l'invention.

### BREVE DESCRIPTION DES FIGURES

La figure 1 représente une vue en coupe d'une bande de roulement comportant des canaux destinés à former de nouvelles rainures ;
La figure 2 montre une vue en coupe de la bande montrée avec la figure 1 selon un plan de coupe dont la trace est repérée par la ligne II-II ;
La figure 3 montre une vue en coupe d'une première variante selon l'invention ;
Les figures 4 et 5 sont des vues en coupe de deux autres exemples d'indicateurs d'usure non texturés entourés de zones de mesure également non texturées, insérés au sein d'un canal dont le fond est texturé ;
- la figure 6 représente une partie d'une texture utilisable sur le fond d'un creux caché selon un premier exemple de réalisation selon lequel la texture présente des éléments en protubérance en forme de brins ;
- la figure 7 représente une partie de la texture de la rainure selon un second exemple de réalisation dans lequel la texture présente des éléments en protubérance en forme de lamelles ;
- la figure 8 représente une partie de la texture de la rainure, selon un troisième exemple de réalisation dans lequel la texture présente des éléments en protubérance en forme de parallélépipèdes ;
- la figure 9 représente une partie de la texture de la rainure, selon un quatrième exemple de réalisation dans lequel la texture présente des éléments en protubérance dont les formes et les distances entre éléments en protubérance sont variables ;
- la figure 10 représente une partie de la texture de la rainure, selon un cinquième exemple de réalisation dans lequel la texture présente des éléments en creux, coniques dans cet exemple ;
- la figure 11 représente une vue agrandie d'une cavité d'un élément en creux de la texture de la figure 10 ;
La figure 12 montre une vue d'un puits de mesure de la profondeur à user ;
La figure 13 montre une vue en coupe selon un plan de coupe dont la trace sur la figure 12 est indiquée par la ligne X-X ;

### DESCRIPTION DES FIGURES

Pour faciliter la lecture des figures, des signes de référence identiques sont employés pour la description de variantes de l'invention dès lors que ces signes de référence renvoient à des éléments d'une même nature qu'elle soit structurelle ou bien fonctionnelle.

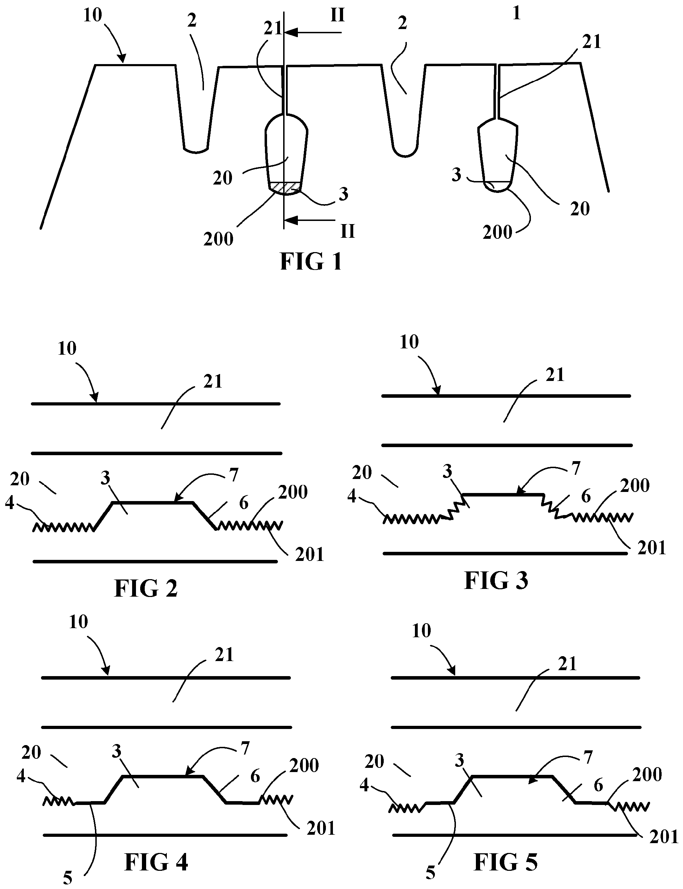

Sur la figure 1, il est représenté une vue en coupe radiale (coupe réalisée dans un plan contenant l'axe de rotation du pneu) d'une bande de roulement 1 d'un pneu pour véhicule poids lourd selon l'invention.

La bande de roulement 1 représentée comprend à neuf deux rainures circonférentielles 2 s'ouvrant sur une surface de roulement 10, chacune de ces rainures 2 ayant une profondeur P1 et une largeur moyenne L1. En combinaison avec ces rainures circonférentielles 2 ouvertes à neuf sur la surface de roulement 10, il est prévu deux creux 20 formant chacun un canal, ces canaux étant situés en totalité sous la surface de roulement 10 à neuf et étant destinés à former de nouvelles rainures après une usure partielle prédéterminée. Pour éviter que la bande de roulement se trouve totalement dépourvue de rainures ouvertes sur la surface de roulement à un stade de son usure, il est judicieux que les nouvelles rainures formées par les canaux 20 s'ouvrent avant totale disparition des rainures 2 ouvertes à neuf.

Les canaux 20 sont prolongés radialement vers l'extérieur de la bande par des incisions 21 facilitant le moulage et le démoulage de la bande. Ces incisions 21 ont la particularité de se fermer lors du passage dans le contact pendant le roulage. Par se fermer, on entend que les parois en vis-à-vis délimitant l'incision 21 entrent en contact au moins partiellement et que s'établit une pression de contact entre ces parois.

Grâce à un tel agencement des volumes de creux dans une bande de roulement il est possible de mettre une quantité appropriée de matière en contact avec la chaussée pour assurer un bon niveau de performances et cela que ce soit à neuf ou après usure partielle tout en préservant des conditions de sécurité et de performance en roulage.

En outre, il est nécessaire de satisfaire aux dispositions résultant des différentes régulations nationales et notamment il est indispensable de satisfaire à l'exigence d'un suivi visuel de l'usure des pneus par l'usager.

Dès lors que les canaux 20, s'ouvrent sur la surface de roulement après une usure partielle, il est nécessaire que l'usager ait un avertissement visuel fort lui permettant de connaitre l'état d'usure de son pneu.

Pour ce faire, chaque fond de canal 200 est pourvu d'au moins un indicateur d'usure 3 moulé en relief sur ledit fond.

Sur la figure 2 montrant une coupe selon un plan repéré par sa trace II-II sur la figure 1, on voit que les canaux 20 sont pourvus sur le fond 200 de textures 4. Ainsi, selon l'invention, et tel qu'illustré, les indicateurs d'usure 3, en particulier les faces de contact 7 des indicateurs d'usure 3, sont avantageusement dépourvus de textures, et présentent une surface produisant un contraste de luminosité avec la surface adjacente texturée. L'effet de contraste entre le fond 200 des canaux 20 et les indicateurs d'usure 3 permet d'augmenter la visibilité de ces indicateurs d'usure, facilitant ainsi leur localisation et le suivi de l'usure. Une telle caractéristique est particulièrement avantageuse lorsque la bande de roulement 1 après usure se trouve dans un environnement où la visibilité est restreinte.

Le fond de chaque canal 20 comprend des moyens lui conférant une luminosité dite première luminosité (L*1) tandis que la face de contact 7 de l'indicateur d'usure 3 comprend des moyens lui conférant une luminosité dite seconde luminosité (L*2). Cette bande de roulement 1 est telle que la première luminosité est inférieure à la deuxième luminosité afin de générer un fort contraste entre le fond du canal et la face de contact de l'indicateur d'usure.

Dans le cas présent la première luminosité L*1 est égale à 12 et est obtenue en formant sur le fond 200 de chaque canal 20 une texture 4 constituée par un ensemble de nervures 12 parallèles entre elles, chaque nervure venue de matière ayant une section de forme triangulaire de hauteur moyenne égale à 0.35 mm. Ces nervures 12 sont formées avec un pas moyen égal à 0.2 mm.

La face contact 7 de l'indicateur d'usure 3, face destinée à venir en contact avec la chaussée après une usure correspondant à l'usure maximale du pneu, est une surface lisse dépourvue de toute texture, c'est à dire dont la rugosité moyenne arithmétique Ra est inférieure à 12. En outre, la luminosité de cette surface L*2 est égale à 24.

Un indicateur d'usure 3 peut à titre de variante comporter des surfaces texturées, comme par exemple au moins une de ces faces latérales 6. La figure 3 illustre un tel exemple de réalisation selon lequel seule la face contact 7 de l'indicateur d'usure est non texturée de sorte que le contraste avec la texture sur le fond du canal soit accentué. L'intégration d'indicateurs d'usure 3 non texturés au sein de canaux dont les fonds voire les parties latérales sont texturés a pour effet d'accentuer la visibilité de ces indicateurs d'usure 3.

L'effet de contraste évoqué provient du fait que la luminosité des zones pourvues de textures est inférieure à celle des zones dépourvues de textures. Divers arrangements ou configurations de textures 4 permettent de produire un tel effet, tel que décrit ci-après, en relation avec les figures 4 à 11.

L'appareil de mesure de la luminosité approprié est un spectro-colorimètre CM 700D de la marque KONICA-MINOLTA (marque déposée). Cet appareil est adapté pour mesurer :
- la luminosité L*1, L*2 des zones de la rainure (zones recouvertes par la texture, zones non recouvertes par la texture) ;
- une composante a* qui définit une première nuance de couleur entre le rouge et le vert ;
- une composante b* qui définit une deuxième nuance de couleur entre le jaune et le bleu.

On positionne cet appareil sur la partie du pneu que l'on veut mesurer et cet appareil donne les valeurs des trois paramètres L*, a*, b* relatifs à une texture de surface. Ces mesures sont effectuées avec le mode « SCI » (Mode de réflexion spéculaire incluse) paramétré à un angle de 10° et un réglage de la lumière de type D65 (réglage défini selon la Commission Internationale de l'Éclairage, CIE). Grâce à cet appareil, on quantifie la luminosité des textures de la rainure 4 qui est ensuite comparée à la luminosité des parties non texturées de l'indicateur d'usure.

L'agencement favorisant la visibilité des indicateurs d'usure 3 en fond de canal 20 préalablement décrit peut être avantageusement utilisé pour tout type de pneu.

Les figures 4 et 5 illustrent des représentations schématiques en coupe d'un autre mode de réalisation des indicateurs d'usure 3 selon l'invention. Des zones 5 non texturées sont dégagées au voisinage immédiat de l'indicateur d'usure 3 afin de permettre de mesurer très précisément la hauteur restante de matière à user après une usure partielle révélant les nouvelles rainures formées par les canaux. Dans l'exemple de réalisation de la figure 4, la base des textures sur le fond des canaux 20 est située à la même position radiale que la zone de mesure 5 jouxtant l'indicateur d'usure 3. Dans l'exemple de la figure 5, les sommets des nervures 12 constituant la texture 4 sont situés à la même position radiale que la zone de mesure 5 jouxtant le indicateur d'usure 3. Dans ces deux exemples de réalisation, la zone de mesure est sensiblement plane et dépourvue de toute texture.

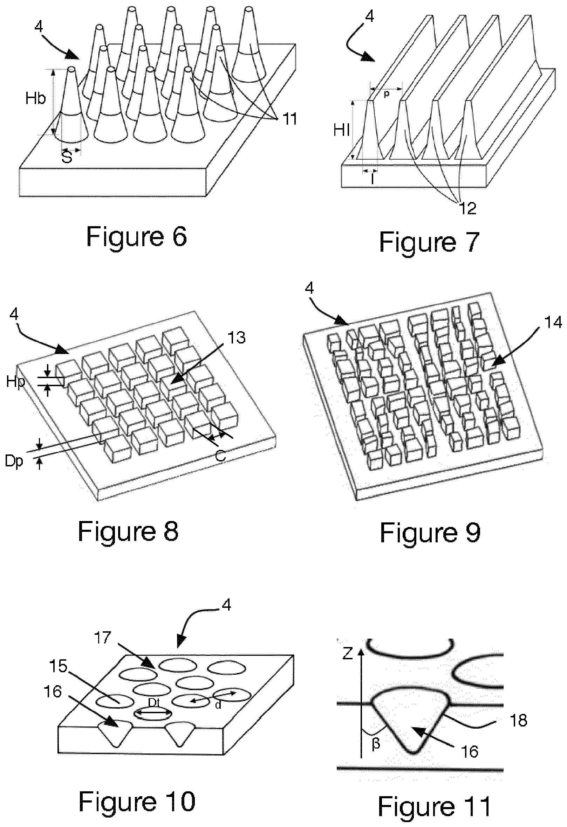

Les figures 6 à 11 illustrent des exemples de textures 4 pouvant être employées sur le fond d'un canal ou tout autre type de cavité cachée dans une bande de roulement afin de permettre une meilleure visibilité des indicateurs d'usure après usure partielle.

La figure 6 illustre un mode de réalisation dans lequel la texture comporte une pluralité de brins 11. Les brins 11 sont répartis dans la texture selon une densité au moins égale à un brin par mm2, chaque brin ayant une section moyenne S comprise entre 0,0005 mm² et 1 mm². On note que la section moyenne de chaque brin correspond à la moyenne des sections S mesurées à intervalles réguliers depuis la base du brin. Les brins ont une forme globalement conique avec une section diminuant dans la hauteur Hb de ces brins.

La figure 7 illustre un mode de réalisation dans lequel la texture est formée par une pluralité de lames ou nervures 12 parallèles entre elles, le pas des lames 12 dans la texture étant au plus égal à 0,5 mm, chaque lame 12 ayant une largeur moyenne comprise entre 0,02 mm et 0,5 mm. On note que la largeur moyenne correspond à la moyenne des largeurs l mesurées à intervalles réguliers dans la hauteur Hl de la lame, la hauteur de chaque lame étant comprise entre 0,05 et 0,5 mm.

Dans une autre variante de réalisation, la texture est constituée par une combinaison de brins 11 et/ou et de lames 12.

L'invention n'est pas limitée aux exemples décrits et représentés et diverses modifications peuvent y être apportées sans sortir de son cadre. Ainsi, selon une autre variante de réalisation non limitative, les lames 12 de la figure 7 peuvent être discontinues. Elles présentent une partie plane entre elles. Elles peuvent en outre présenter entre elles des différences de section. De plus, les lames peuvent présenter des courbures ou des angles, notamment dans leur longueur. Elles peuvent en outre, être de longueur variable.

Dans l'exemple de la figure 8, la texture est formé d'une pluralité de parallélépipèdes 13 de côté C compris entre 0,05 mm et 0,5 mm, de hauteur Hp comprise entre 0,05 mm et 0,5 mm, la distance Dp entre deux parallélépipèdes adjacents étant comprise entre 0,05 mm et 0.5 mm. En variante la section des éléments de la texture peut être circulaire, polygonale (par exemple hexagonale). Avec les structures carrées ou polygonales, il est possible d'organiser plus facilement les éléments les uns par rapport aux autres de sorte à limiter la surface des zones intermédiaires entre les éléments.

Dans la variante de la figure 9, les éléments 14 de la texture ont des formes variables ainsi que des distances variables entre eux. Cette variante permet de rendre moins visible les détails de la texture 4.

La figure 10 illustre une texture selon une autre variante de réalisation non limitative. Dans cette variante, la texture est formée par une pluralité de cavités 16. Les cavités 16 sont ici en forme de cônes qui s'étendent dans la profondeur et débouchent sur une surface en formant des ouvertures 15 circulaires de diamètre Df. Les cavités 16 ont ainsi une section qui diminue dans la profondeur. On note que dans cette variante, les ouvertures 15 des cavités 16 ne se touchent pas. Les ouvertures 15 sont séparées par des zones intermédiaires 17. En outre, les ouvertures 15 sont régulièrement réparties de sorte que la distance d entre les centres des ouvertures 15 est la même partout.

La figure 11 est une vue agrandie de la texture de la figure 10. Tout ou partie des cavités a ici au moins une paroi 18 qui, selon une vue en coupe, fait un angle β compris entre 10° et 60° par rapport à une direction Z perpendiculaire à la surface portant la texture.

Pour satisfaire à certaines législations, il est parfois indispensable de prévoir dès l'état neuf des moyens pour localiser et visualiser les indicateurs de limite d'usure quand ces derniers sont disposés dans des canaux sous-jacents.

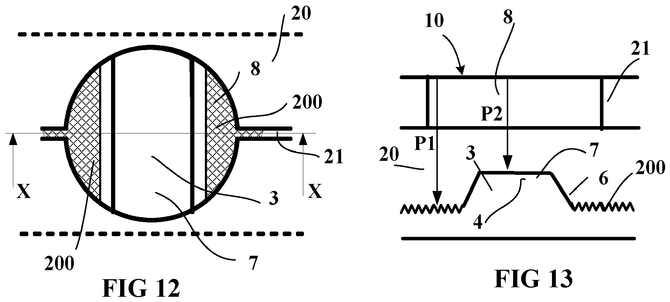

La figure 12 montre une partie de la surface de roulement d'un pneu selon l'invention comportant une incision 21 prolongée à l'intérieur par un canal 20. En outre, un puits de mesure 8 est formé de manière à traverser l'incision 21 pour s'ouvrir sur la surface de roulement à neuf et dans le canal 20. Ce puits de mesure 8 est disposé à l'aplomb d'un indicateur d'usure 3 moulé sur le fond 200 du canal 20. Dans l'exemple présent, ce puits de mesure a une section circulaire de dimension appropriée pour permettre de voir en partie la face de contact texturée 7 de l'indicateur d'usure ainsi que des portions 201, 202 du fond 200 de part et d'autre de l'indicateur. Ce puits de mesure permet la mesure de l'épaisseur restante à user. La différence de luminosité entre la face de contact de l'indicateur et le fond du canal facilite la perception à neuf de l'indicateur.

Sur la figure 13 montrant une coupe du dispositif montré avec la figure 12 selon un plan de coupe dont la trace sur la figure 12 correspond à la ligne X-X, on distingue le puits de mesure 8 s'étendant dans l'épaisseur de la bande de roulement. On note qu'il est possible de mesurer à tout moment à la fois l'épaisseur restante à user (P2) et l'épaisseur totale jusqu'au fond du canal (P1).

Les figures et leurs descriptions faites ci-dessus illustrent l'invention plutôt qu'elles ne la limitent.

Les signes de références dans les revendications n'ont aucun caractère limitatif. Les verbes "comprendre" et "comporter" n'excluent pas la présence d'autres éléments que ceux listés dans les revendications.

Bien entendu, l'invention n'est pas limitée aux exemples décrits et représentés et diverses modifications peuvent y être apportées sans sortir du cadre tel que défini par les revendications. Notamment, ce qui a été décrit avec deux canaux pourrait aisément se concevoir avec tout type de creux comportant au moins une partie cachée c'est à dire formée à neuf sous la surface de roulement et destinée à s'ouvrir sur la surface de roulement après une usure partielle prédéterminée.

## Revendications

1. Pneu comprenant une bande de roulement (1), le pneu comprenant au moins un canal (20) destiné à s'ouvrir après une usure prédéterminée pour former une rainure, ce canal (20) comprenant deux parois en vis-à-vis reliées par un fond (200) et sur ce fond au moins un indicateur d'usure (3), l'indicateur d'usure comprenant une face de contact (7) destinée à entrer en contact avec une chaussée lorsque le pneu atteint un niveau d'usure limite, le fond du canal (200) comprenant des moyens lui conférant une luminosité dite première luminosité (L*1), la face de contact (7) de l'indicateur d'usure (3) étant dépourvue de toute texture, c'est à dire que la rugosité moyenne arithmétique Ra de cette surface est inférieure à 12 lui conférant une luminosité dite seconde luminosité (L*2), la luminosité étant exprimée selon une échelle allant de 0 à 100 selon le modèle colorimétrique L*a*b* établi par la Commission Internationale de l'Éclairage, le pneu étant **caractérisé en ce que** cette bande est telle que la première luminosité est inférieure à la deuxième luminosité afin de générer un contraste entre le fond du canal (200) et la face de contact (7) de l'indicateur d'usure, les moyens pour obtenir la première luminosité correspondant à une texture (4) formée de motifs venus de matière avec un pas moyen répétitif au moins égal à 0.1 mm et au plus égal à 0.6 mm, cette texture (4) du fond (200) entourant l'indicateur d'usure (3).

2. Pneu selon la revendication 1 **caractérisé en ce que** la différence de luminosité entre la première et la seconde luminosité est d'au moins 5 unités de luminosité.

3. Pneu selon l'une des revendications 1 à 2 **caractérisé en ce que** la première luminosité (L*1) est comprise entre 5 et 18 unités, préférentiellement entre 8 et 16 unités.

4. Pneu selon l'une des revendications 1 à 3 **caractérisé en ce que** la luminosité de la face de contact (7) est comprise entre 20 et 35 unités.

5. Pneu selon l'une des revendications 1 à 4 dans lequel l'indicateur d'usure (3) comprend au moins une face latérale (6) reliant la face de contact (7) de l'indicateur d'usure au fond (200) du canal, cette face latérale (6) étant pourvue d'une texture (4) ayant une luminosité (L*1) inférieure à la luminosité de la face de contact de l'indicateur d'usure.

6. Pneu selon l'une des revendications 1 à 5, dans lequel le canal (20) comporte au moins une zone (5) dépourvue de texture, disposée entre une zone pourvue de texture (4) et une face latérale (6) de l'indicateur d'usure (3).

7. Pneu selon la revendication 6 **caractérisé en ce que** la longueur de la zone (5) dépourvue de texture a une longueur comprise entre 3 et 10 millimètres.

8. Pneu selon la revendication 1 **caractérisé en ce que** les composantes a* et b* de la face de contact (7) de l'indicateur d'usure sont inférieurs à 5 points.

9. Pneu selon l'une des revendications 1 à 8 **caractérisé en ce qu'**il est formé au moins un puits de mesure (8) s'ouvrant sur la surface de roulement à neuf et débouchant dans un canal (20) afin de permettre la vision d'une partie de la face de contact (7) d'un indicateur d'usure (3) et d'une partie du fond (200) d'un canal sur lequel est moulé ledit indicateur d'usure, la face de contact et le fond du canal présentant un écart de luminosité d'au moins 5 unités de luminosité.

## Patentansprüche

1. Reifen mit einem Laufstreifen (1), wobei der Reifen mindestens einen Kanal (20) enthält, der dazu bestimmt ist, sich nach einem vorbestimmten Verschleiß zu öffnen, um eine Rille zu bilden, wobei dieser Kanal (20) zwei durch einen Boden (200) verbundene gegenüberliegende Wände und auf diesem Boden mindestens einen Verschleißanzeiger (3) enthält, wobei der Verschleißanzeiger eine Kontaktseite (7) enthält, die dazu bestimmt ist, mit einer Straße in Kontakt zu kommen, wenn der Reifen einen Grenzverschleißpegel erreicht, wobei der Boden des Kanals (200) Einrichtungen enthält, die ihm eine erste Helligkeit (L*1) genannte Helligkeit verleihen, wobei die Kontaktseite (7) des Verschleißanzeigers (3) keinerlei Struktur aufweist, d.h., dass die mittlere arithmetische Rauheit Ra dieser Fläche geringer als 12 ist, was ihr eine zweite Helligkeit (L*2) genannte Helligkeit verleiht, wobei die Helligkeit gemäß einer Skala ausgedrückt wird, die von 0 bis 100 gemäß dem Farbmodell L*a*b* geht, das von der Internationalen Beleuchtungskommission erstellt wurde, wobei der Reifen **dadurch gekennzeichnet ist, dass** dieser Streifen so ist, dass die erste Helligkeit geringer als die zweite Helligkeit ist, um einen Kontrast zwischen dem Boden des Kanals (200) und der Kontaktseite (7) des Verschleißanzeigers zu erzeugen, wobei die Einrichtungen zum Erhalt der ersten Helligkeit einer Struktur (4) entsprechen, die von aus dem gleichen Material bestehenden Mustern gebildet wird, mit einem mittleren Wiederholungsabstand mindestens gleich 0,1 mm und höchstens gleich 0,6 mm, wobei diese Struktur (4) des Bodens (200) den Verschleißanzeiger (3) umgibt.

2. Reifen nach Anspruch 1, **dadurch gekennzeichnet, dass** der Helligkeitsunterschied zwischen der ersten und der zweiten Helligkeit mindestens 5 Helligkeitseinheiten beträgt.

3. Reifen nach einem der Ansprüche 1 bis 2, **dadurch gekennzeichnet, dass** die erste Helligkeit (L*1) zwischen 5 und 18 Einheiten, vorzugsweise zwischen 8 und 16 Einheiten liegt.

4. Reifen nach einem der Ansprüche 1 bis 3, **dadurch gekennzeichnet, dass** die Helligkeit der Kontaktseite (7) zwischen 20 und 35 Einheiten liegt.

5. Reifen nach einem der Ansprüche 1 bis 4, wobei der Verschleißanzeiger (3) mindestens eine Seitenfläche (6) enthält, die die Kontaktseite (7) des Verschleißanzeigers mit dem Boden (200) des Kanals verbindet, wobei diese Seitenfläche (6) mit einer Struktur (4) versehen ist, die eine Helligkeit (L*1) geringer als die Helligkeit der Kontaktseite des Verschleißanzeigers hat.

6. Reifen nach einem der Ansprüche 1 bis 5, wobei der Kanal (20) mindestens eine keine Struktur aufweisende Zone (5) aufweist, die zwischen einer mit einer Struktur (4) versehenen Zone und einer Seitenfläche (6) des Verschleißanzeigers (3) angeordnet ist.

7. Reifen nach Anspruch 6, **dadurch gekennzeichnet, dass** die Länge der keine Struktur aufweisenden Zone (5) eine Länge zwischen 3 und 10 Millimeter hat.

8. Reifen nach Anspruch 1, **dadurch gekennzeichnet, dass** die Komponenten a* und b* der Kontaktseite (7) des Verschleißanzeigers geringer als 5 Punkte sind.

9. Reifen nach einem der Ansprüche 1 bis 8, **dadurch gekennzeichnet, dass** mindestens ein Messschacht (8) gebildet wird, der sich an der Lauffläche im Neuzustand öffnet und in einen Kanal (20) mündet, um die Ansicht eines Teils der Kontaktseite (7) eines Verschleißanzeigers (3) und eines Teils des Bodens (200) eines Kanals zu ermöglichen, auf dem der Verschleißanzeiger geformt ist, wobei die Kontaktseite und der Boden des Kanals eine Helligkeitsabweichung von mindestens 5 Helligkeitseinheiten aufweisen.

## Claims

1. Tyre comprising a tread (1), the tyre comprising at least one channel (20) that is intended to open up after a given amount of wear in order to form a groove, this channel (20) comprising two opposite walls connected by a bottom (200) and at least one wear indicator (3) on this bottom, the wear indicator comprising a contact face (7) that is intended to come into contact with a road surface when the tyre reaches a wear limit, the bottom (200) of the channel comprising means that give it lightness known as first lightness (L*1), the contact face (7) of the wear indicator (3) comprising means that give it lightness known as second lightness (L*2), the lightness being expressed using a scale that ranges from 0 to 100 according to the L*a*b* colour model established by the International Commission on Illumination, this tyre being **characterized in that** this tread is such that the first lightness is less than the second lightness in order to create a contrast between the bottom (200) of the channel and the contact face (7) of the wear indicator, the means for obtaining the first lightness corresponding to a texture formed by integrally formed motifs with a repetitive mean spacing at least equal to 0.1 mm and at most equal to 0.6 mm, this texture in the bottom (200) of the channel surrounding the wear indicator (3).

2. Tyre according to Claim 1, **characterized in that** the difference in lightness between the first and second lightness is at least 5 units of lightness.

3. Tyre according to one of Claims 1 to 2, **characterized in that** the first lightness (L*1) is between 5 and 18 units, preferably between 8 and 16 units.

4. Tyre according to one of Claims 1 to 3, **characterized in that** the lightness of the contact face (7) is between 20 and 35 units.

5. Tyre according to one of Claims 1 to 4, wherein the wear indicator (3) comprises at least one lateral face (6) connecting the contact face (7) of the wear indicator to the bottom (200) of the channel, this lateral face (6) having a texture (4) that has a lightness (L*1) less than the lightness of the contact face of the wear indicator.

6. Tyre according to one of Claims 1 to 5, wherein the channel (20) has at least one zone (5) that does not have a texture, said zone being disposed between a zone provided with a texture (4) and a lateral face (6) of the wear indicator (3).

7. Tyre according to Claim 6, **characterized in that** the length of the zone (5) that does not have a texture has a length of between 3 and 10 millimetres.

8. Tyre according to Claim 1, **characterized in that** the components a* and b* of the contact face (7) of the wear indicator are less than 5 points.

9. Tyre according to one of Claims 1 to 8, **characterized in that** at least one measuring well (8) is formed that opens onto the tread surface in the new state and leads into a channel (20) in order to allow a part of the contact face (7) of a wear indicator (3) and a part of the bottom (200) of a channel on which said wear indicator is moulded to be seen, the contact face and the bottom of the channel having a difference in lightness of at least 5 units of lightness.
